# EUROPEAN PATENT APPLICATION

(11) **EP 1 384 755 A1**
(43) Date of publication of application: **28.01.2004**
(21) Application number: 02714534.1
(22) Date of filing: 08.04.2002
(51) Int. Cl.: C08L 69/00, C08G 64/16

(54) **POLYCARBONATE RESIN COMPOSITION**

(30) Priority: 09.04.2001 JP 2001110683
(71) Applicant: Mitsubishi Gas Chemical Company, Inc., Chiyoda-ku, Tokyo 100-8324 (JP)
(72) Inventor: NAGAI, Satoshi, Mitsubishi Gas Chemical Co Inc., Yokkaichi-shi, Mie 510-0886 (JP); SASAKI, Makoto, Mitsubishi Gas Chemical Co Inc, Yokkaichi-shi, Mie 510-0886 (JP); MURASE, Noritaka, Mitsubishi Gas Chemical Co Ltd, Yokkaichi-shi, Mie 510-0886 (JP); YOSHIDA, Hisashi, Mitsubishi Gas Chemical Co Ltd, Yokkaichi-shi, Mie 510-0886 (JP); HASHIMOTO, Tomoyuki, Mitsubishi Gas Chemical Co, Yokkaichi-shi, Mie 510-0886 (JP)
(74) Representative: HOFFMANN - EITLE
(86) International application number: PCT/JP2002/003489
(87) International publication number: WO 2002/083791

(57) **Abstract**

The polycarbonate resin of the present invention has an improved refractive index, balance of dispersion, photoelastic constant, and so on while still maintaining the characteristics of polycarbonate, such as excellent impact resistance and heat resistance,andischaracterized by comprising an aromatic-aliphatic copolymerized polycarbonate resin (A) and an aromatic polycarbonate resin (B) having a structural unit represented by the following formula (1): 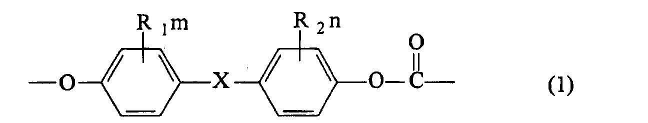 (Where X in the above formula (1) is: 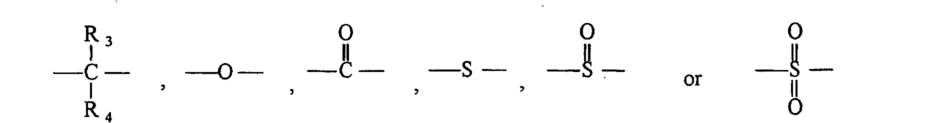 and wherein R₃ and R₄ are a hydrogen atom, an alkyl group having 1 to 10 carbon atoms or a phenyl group, and R₃ and R₄ may combine to form a ring, R₁ and R₂ are a hydrogen atom, an alkyl group having 1 to 10 carbon atoms or a halogen atom, R₁, R₂, R₃ and R₄ may be same or different, and m and n are a number of substituent being an integer from 0 to 4).

A polycarbonate resin composition according to the present invention can be suitably used as a plastic optical material for various lenses, prisms, optical disk substrates, and the like.

## Description

### TECHNICAL FIELD

The present invention relates to a transparent polycarbonate resin composition with high refractive index, high degree of reverse dispersion and low coefficient of photoelasticity, that has excellent impact resistance, oil resistance, heat resistance and hue. The polycarbonate resin composition can be suitably used as a plastic optical material for various lenses, prisms, optical disk substrates, and the like.

### PRIOR ART

Polycarbonate resins are widely utilized as engineering plastics since they have excellent mechanical characteristics such as impact resistance as well as excellent heat resistance and transparency. Particularly, due to their excellent transparency, they are used in a variety of optical materials such as various lenses, prisms, optical disk substrates, and the like.

However, polycarbonate resins derived from aromatic dihydroxy compound have defects in that they do not have sufficient performance for wide application as optical recording materials and optical lenses. This is becausemoldings thereof have high double refraction due to their high photoelasticity and comparatively bad melt fluidity, and also, since their Abbe number is as low as 30 even though they have a high refractive index such as 1.58.

As a method of improving upon these defects, aromatic-aliphatic copolymerized polycarbonate resins have been proposed (JP 64-66234 A and JP 11-165426 A). These aromatic-aliphatic copolymerized polycarbonate resins can be widely used as optical materials since they have excellent heat resistance as well as a low coefficient of photoelasticity and a good balance between their refractive index and dispersion characteristics.

However, there still remains the possibility of trouble in a variety of application environments since mere copolymerization can not provide sufficient impact resistance at low temperatures or oil resistance.

An object of the present invention is therefore to solve the above problems of the prior art and provide a method for cheaply producing a polycarbonate resin composition having excellent impact resistance at low temperatures, high oil resistance and heat resistance as well as a high Abbe number and high refractive index.

### SUMMARY OF THE INVENTION

As a result of extensive studies to solve the above problems, the present inventors discovered the present invention by finding that a polycarbonate resin composition comprising an aromatic-aliphatic copolymerized polycarbonate resin (A) and an aromatic polycarbonate resin (B) having a structural unit represented by the following formula (1) has excellent impact resistance at low temperatures, oil resistance and heat resistance, as well as a high Abbe number and refractive index: 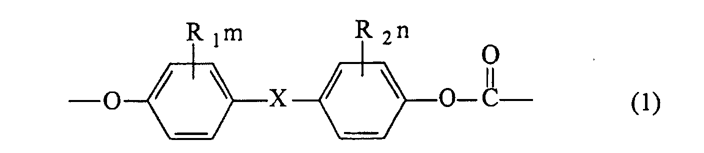 (where X in the above formula (1) is: 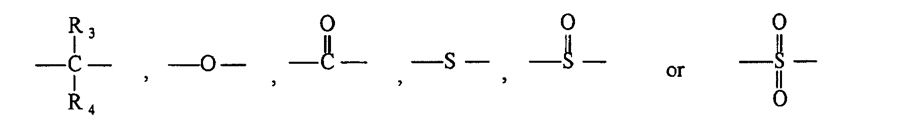 and wherein R₃ and R₄ are a hydrogen atom, an alkyl group having 1 to 10 carbon atoms or a phenyl group, and R₃ and R₄ may combine to form a ring, R₁ and R₂ are a hydrogen atom, an alkyl group having 1 to 10 carbon atoms or a halogen atom, R₁, R₂, R₃ and R₄ may be the same or different, and m and n are a number of the substituent being an integer from 0 to 4).

### BEST MODE FOR CARRYING OUT THE INVENTION

The polycarbonate resin composition of the present invention will be demonstrated hereinafter.

### (Aromatic polycarbonate resin (B))

Although any aromatic polycarbonate resin made by a conventional process may be used as an aromatic polycarbonate resin (B) in the present invention, in particular, aromatic polycarbonate resin made by an interfacial polymerization method, preferably, the polycarbonate obtained from bisphenol A is used. The aromatic polycarbonate resin (B) has a viscosity average molecular weight of preferably 10,000 to 50,000, more preferably 18, 000 to 40, 000, further more preferably 20,000 to 40,000, most preferably 25,000 to 40,000. When the viscosity average molecular weight is below 10, 000, impact resistance is insufficient, while a viscosity average molecular weight above 50, 000 causes problems in injection molding due to the melt viscosity becoming too high. When the viscosity average molecular weight is 18, 000 or more, oil resistance becomes very good.

The structure of an aromatic structural unit of aromatic polycarbonate resin (B) and an aromatic structural unit derived from aromatic dihydroxy compounds in an aromatic-aliphatic copolymerized polycarbonate resin (A) may either be the same or different.

### (Aromatic-aliphatic copolymerized polycarbonate resin (A))

The aromatic-aliphatic copolymerized polycarbonate resin (A) in the present invention includes a random, block or alternating copolymer, and has a viscosity average molecular weight of preferably 5,000 to 50,000, or more preferably 10,000 to 30,000.

The aromatic-aliphatic copolymerized polycarbonate resin (A) in the present invention may be produced using an aromatic dihydroxy compound and an aliphatic dihydroxy compound by general production methods of polycarbonate resin which are conventionally known, particularly by ester interchange methods. Polymerization by an ester interchange reaction using a carbonic acid diester is carried out by a known melt polycondensation method. That is, a melt polycondensation using an aromatic dihydroxy compound represented by the following formula (2), an aliphatic dihydroxy compound, a carbonic acid diester and a catalyst is carried out under heating and a normal or a reduced pressure while removing by-product(s). The reaction is generally carried out in a multistage process. 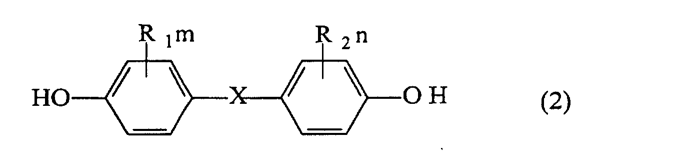 In the above formula (2), X is: 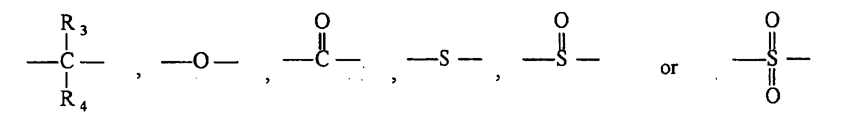 wherein R₃ and R₄ are a hydrogen atom, a alkyl group having 1 to 10 carbon atoms or phenyl group, and R₃ and R₄ may combine to form a ring, R₁ and R₂ are a hydrogen atom, alkyl group having 1 to 10 carbon atoms or a halogen atom, R₁, R₂, R₃ and R₄ may be the same or different, and m and n represent a number of the substituent being an integer from 0 to 4.

Examples of the aromatic dihydroxy compound represented by the above formula (2) include:
bis(4-hydroxyphenyl)methane, 1,1-bis(4-hydroxyphenyl)ethane,
2,2-bis(4-hydroxyphenyl)propane, 2,2-bis(4-hydroxyphenyl)butane,
2,2-bis(4-hydroxyphenyl)octane,
bis(4-hydroxyphenyl)phenylmethane,
2,2-bis(4-hydroxy-3-methylphenyl)propane,
1,1-bis(4-hydroxy-3-t-butylphenyl)propane,
2,2-bis(4-hydroxy-3-bromophenyl)propane,
1,1-bis(4-hydroxyphenyl)cyclopentane,
1,1-bis(4-hydroxyphenyl)cyclohexane (hereinafter BPZ),
4,4'-dihydroxydiphenyl ether, 4,4'-dihydroxy-3,3'-dimethylphenyl ether, 4,4'-dihydroxyphenyl sulfide,
4,4'-dihydroxy-3,3'-dimethyldiphenyl sulfide,
4,4'-dihydroxydiphenyl sulfoxide,
4,4'-dihydroxy-3,3'-dimethyldiphenyl sulfoxide,
4,4'-dihydroxydiphenyl sulfone, and
4,4'-dihydroxy-3,3'-dimethyldiphenyl sulfone.

Of these, 1,1-bis(4-hydroxyphenyl)cyclohexane is particularly preferred.

Examples of the aliphatic dihydroxy compound in the present invention include:
ethylene glycol, 1,4-butanediol, 1,6-hexanediol, 1,10-decanediol, tricyclo(5.2.1.0^{2.6})decane dimethanol,
3,9-bis(2-hydroxyethyl)-2,4,8,10-tetraoxaspiro(5.5)undecane,
3,9-bis(2-hydroxy-1,1-diethylethyl)-2,4,8,10-tetraoxaspiro(5.5 )undecane,
3,9-bis(2-hydroxy-1,1-dipropylethyl)-2,4,8,10-tetraoxaspiro(5. 5) undecane, pentacyclo[9.2.1.1^{3.9}.0^{2.10}.0^{4.8}]pentadecane dimethanol, pentacyclo[9.2.1.1^{4.7}.0^{2.10}.0^{3.8}]pentadecane dimethanol,
2,6-decalin dimethanol, 1,4-cyclohexane dimethanol and adamantane dimethanol.

When using an aliphatic dihydroxy compound having an alicyclic structure, balance between optical properties such as the Abbe number and the refractive index are good. Particularly tricyclo(5.2.1.0^{2.6})decane dimethanol (hereinafter, TCDDM) represented by following formula (3) is preferable from the view of the balance between its Abbe number and refractive index.

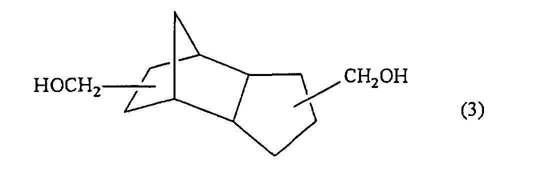

In the above mentioned aliphatic dihydroxy compound, those which contain a carbonyl group of less than 0.1mg/g by KOH conversion, preferably 0.5mg/g or less, more preferably 0.1mg/g or less as impurities may be used. Further, an aliphatic dihydroxy compound containing less than 1ppm each of chlorine and metal ions is preferable.

In the present invention, examples of a carbonic acid diester for producing the polycarbonate by ester interchange method include: diphenylcarbonate, ditolylcarbonate, bis(chlorophenyl)carbonate, m-cresylcarbonate, dinaphthylcarbonate, dimethylcarbonate, diethylcarbonate, dibutylcarbonate and dicyclohexylcarbonate.

Of these, diphenylcarbonate is particularly preferred. Chloride content which causes color development is preferably less than 20ppm in a diphenylcarbonate, more preferably 10ppm or less. The diphenylcarbonate is preferably used in an amount of 0.97 to 1.2 moles, particularly preferably 0.99 to 1.10 moles relative to the aromatic dihydroxy compound and the aliphatic dihydroxy compound, totaling 1 mole.

### (Catalyst)

In the present invention, a basic compound is used as a catalyst for producing the polycarbonate by the ester interchange method. Examples of such basic compounds include an alkali metal and/or an alkaline earth metal and a nitrogen-containing compound. Organic acid salts, inorganic acid salts, oxides, hydroxides, hydrides or alkoxides of alkali metals and alkaline earth metals, quaternary ammonium hydroxide and salts thereof, amines, and the like are preferably used. These compounds may be used either singly or in combination.

Examples of such alkali metals include:sodium hydroxide, potassium hydroxide, cesium hydroxide, lithium hydroxide, sodium hydrogencarbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, phenylation boron sodium, sodium benzoate, potassium benzoate, cesium benzoate, lithium benzoate, disodium hydrogenphosphate, dipotassium hydrogenphosphate, dicesium hydrogenphosphate, dilithium hydrogenphosphate, disodium phenyl phosphate, disodium salts, dipotassium salts, dicesium salts and dilithium salts of bisphenol A, and sodium salts, potassium salts, cesium salts and lithium salts of phenol.

Examples of alkaline earth metals include magnesium hydroxide, calcium hydroxide,strontium hydroxide,barium hydroxide, magnesium hydrogencarbonate, calcium hydrogencarbonate, strontium hydrogencarbonate, barium hydrogencarbonate, magnesium acetate, calcium acetate, strontium acetate, barium acetate, magnesium stearate, calcium stearate, calcium benzonate and magnesium phenyl phosphate.

Examples of nitrogen-containing compounds include: ammonium hydroxides having an alkyl, aryl or alkylaryl group such as tetramethyl ammonium hydroxide, tetraethyl ammonium hydroxide , tetrapropyl ammonium hydroxide, tetrabutyl ammonium hydroxide and benzyltrimethyl ammonium hydroxide; tertiary amines such as triethylamine, dimethylbenzylamine and triphenylamine; secondary amines such as diethylamine and dibutylamine; primary amines such aspropylamine and butylamine; imidazoles such as 2-methylimidazole and 2-phenylimidazole; and basic salts such as ammonia, tetramethyl ammonium borohydride, tetrabutyl ammonium tetraphenyl borate and tetraphenyl ammonium tetraphenyl borate.

These catalysts are used in an amount of 10⁻⁹ to 10⁻³ mole in relation to aromatic dihydroxy compound and the aliphatic dihydroxy compound, totaling 1 mole, and preferably in an amount of 10⁻⁷ to 10⁻⁵ mole.

### (Polymerization method)

The ester interchange method of the present invention can be carried out by a conventionally known melt polycondensation method. That is, the polymerization using said materials and a catalyst is carried out by a melt polycondensation method under heating and a normal or reduced pressure while removing by-product(s). The reaction is generally carried out in a multistage process.

In detail, the first stage reaction is carried out at a temperature of 120 to 2 60°C, preferably 180 to 240°C for 0 to 5 hours, more preferably for 0.5 to 3 hours. Thereafter, the aromatic dihydroxy compound, the aliphatic dihydroxy compound and the carbonic acid diester are reacted while reducing the pressure and raising the temperature in the reaction system. Finally, the polycondensation reaction is carried out at a temperature of 200 to 300°C under a final reduced pressure of 133Pa or below. Such a reaction may be carried out in a continuous process or a batch process. The reactor used in the above reaction may be a vessel type reactor, an extruder type reactor or a horizontal type reactor equipped with a mixing impeller such as a paddle impeller, a grating impeller or a spectacle impeller with excellent surface renewability.

To maintain thermal stability and hydrolytic stability, it is advisable to remove or deactivate the catalyst in the polycarbonate resin composition of the present invention. Generally, a method of deactivating an ester interchange catalyst such as alkali metals or alkaline earth metals by addition of known acidic materials is preferably carried out. Examples of these materials include: phosphorus containing acidic compounds such as phosphoric acid, phosphorous acid, hypophosphorous acid, phenyl phosphoric acid, phenylphosphine, phenylphosphinic acid, phenylphosphonic acid, diphenyl phosphate, diphenyl phosphite, diphenylphosphine, diphenylphosphine oxide, diphenylphosphine acid, monomethylacid phosphate, monomethylacid phosphite, dimethylacid phosphate, dimethylacid phosphite, monobutylacid phosphate, monobutylacid phosphite, dibutylacid phosphate, dibutylacid phosphite, monostearylacid phosphate and distearylacid phosphate; aromatic sulfonic acid compounds such as p-toluenesulfonic acid, p-methyltoluene sulfonate, p- ethyltoluene sulfonate, p-propyltoluene sulfonate, p-butyltoluene sulfonate, p-pentyltoluene sulfonate, p-hexyltoluene sulfonate, p-octyltoluene sulfonate, p-phenyltoluene sulfonate, p-phenethyltoluene sulfonate and p-naphthyltoluene sulfonate.
These catalyst deactivators may be added either upon, before or after melting and mixing of the aromatic polycarbonate resin (B).

The amount of the phosphorus containing acidic compound and the aromatic sulfonic acid compound to be added is 1/5 to 20 times, preferably 1/2 to 15 times the neutralization equivalent based on 1 mole of the catalyst of alkali metal compounds and/or alkaline earth metal compounds. When this amount is below 1/5 times, the desired effects are not obtained, whereas an amount above 20 times causes heat resistance and mechanical properties to deteriorate.

Aromatic sulfonic acid phosphonium salts, for example benzenesulfonic acid tetra butyl phosphonium salts, p-toluene sulfonic acid tetra butyl phosphonium salts, butylbenzene sulfonic acid tetrabutyl phosphonium salts, octylbenzene sulfonic acid tetrabutyl phosphonium salts, dodecylbenzene sulfonic acid tetrabutyl phosphonium salts, dodecylbenzene sulfonic acid tetramethyl phosphonium salts, dodecylbenzene sulfonic acid tetraethyl phosphonium salts, dodecylbenzene sulfonic acid tetrahexyl phosphonium salts are preferably used.

The amount of the aromatic sulfonic acid phosphonium salt is 1 to 300 ppm, preferably 10 to 100 ppm based on the amount of the aromatic-aliphatic copolymerized polycarbonate resin (A). When the amount of the aromatic sulfonic acid phosphonium salt is below 1 ppm, the desired effects are not obtained, whereas an amount above 300 ppm causes heat resistance and mechanical properties to deteriorate.

After deactivating a catalyst, a process for degassing and removing low boiling point compounds at a temperature of 200 to 300°C under a pressure of 13 to 133Pa may also be added. In the above process, it is preferable to use a horizontal type or thin-film vaporizer equipped with a paddle impeller, a grating impeller or a spectacle impeller.

### (Additives)

The polycarbonate resin composition of the present invention may contain, if desired, other additives such as antioxidants, colorants, dyes, enhancers, fillers, ultraviolet light absorbers, lubricants, releaseagents, crystal nucleating agents, plasticizers, flowability modifiers, antistatic agents and the like in limits that they do not impair the properties of the present polycarbonate resin composition. Further, in order to modify the properties of the present resin, other polycarbonate resins or thermoplastic resins may be blended therewith.

Examples of antioxidants in the present invention include:
phosphite compounds such as triphenylphosphite,
tris(4-methylphenyl)phosphite, tris(4-t-butylphenyl)phosphite,
tris(monononylphenyl)phosphite,
tris(2-methyl-4-ethylphenyl)phosphite,
tris(2-methyl-4-t-butylphenyl)phosphite,
tris(2,4-di-t-butylphenyl)phosphite,
tris(2,6-di-t-butylphenyl)phosphite,
tris(2,4-di-t-butyl-5-metylphenyl)phosphite, tris(mono, diphenyl)phosphite,
bis(monononylphenyl)pentaerythritol-di-phosphite,
bis(2,4-di-t-butylphenyl)pentaerythritol-di-phosphite,
bis(2,6-di-t-butyl-4-methylphenyl)pentaerythritol-di-phophite,
bis(2,4,6-tri-t-butylphenyl)pentaerythritol-di-phosphite,
bis(2,4-di-t-butyl-5-methylphenyl)pentaerythritol-di-phosphite,
2,2-methylenebis(4,6-dimethylphenyl)octylphosphite,
2,2-methylenebis(4-t-butyl-6-methylphenyl)octylphosphite,
2,2-methylenebis(4,6-di-t-butylphenyl)octylphosphite,
2,2-methylenebis(4,6-dimethylphenyl)hexylphosphite,
2,2-methylenebis(4,6-di-t-butylphenyl)hexylphosphite,
2,2-methylenebis(4,6-di-t-butylphenyl)stearylphosphite; hindered phenol compounds such as pentaerythritol-tetrakis[3-(3,5-di-t-butyl-4-hydroxyphenyl)pro pionate],
1,6-hexanediol-bis[3-(3,5-di-t-butyl-4-hyrdroxyphenyl)propiona te], octadecyl-3-(3,5-di-t-butyl-4-hydroxyphenyl)propionate,
1,3,5-trimethyl-2,4,6-tris(3,5-di-t-butyl-4-hydroxybenzyl)benz ene,
triethyleneglycol-bis-[3-(3-t-butyl-5-methyl-4-hydroxyphenyl)p ropionate],
3,9-bis{2-[3-(3-t-buthyl-4-hydroxy-5-methylphenyl)propionyloxy ]-1,1-dimethylethyl}-2,4,8,10-tetraoxaspiro[5,5]undecane,
1,1,3-tris[2-methyl-4-(3,5-di-t-butyl-4-hydroxyphenylpropionyl oxy)-5-t-buthylphenyl]butane; or lactone compounds such as 5,7-di-t-butyl-3-(3,4-dimethylphenyl)-3H-benzofuran-2-one.

In order to retain a good hue, it is preferable to use highly pure materials which contain hardly any impurities such as organic impurities, metal impurities and chlorine. These antioxidants may be used alone or in combination. Particularly, it is effective to use one or more kinds from phosphite compounds, hindered phenol compounds and lactone compounds, respectively.

The amount of the antioxidant to be added is 0.005 to 1 part, preferably 0.01 to 0.5 part, more preferably 0.01 to 0.2 part by weight relative to 100 parts by weight of the polycarbonate resin composition. When the amount of the antioxidant is below 0. 005 part by weight, desired effects are not obtained, whereas an amount above 1 part by weight causes heat resistance and mechanical properties to deteriorate.

Examples of the ultraviolet light absorber include:
2-(5-methyl-2-hydroxyphenyl)benzotriazole,
2-[2-hydroxy-3,5-bis(α,α-dimethylbenzyl)phenyl]-2H-benzotriazo le, 2-(3,5-di-t-butyl-2-hydroxyphenyl)benzotriazole,
2-(3-t-butyl-5-methyl-2-hydroxyphenyl)-5-chlorobenzotriazole,
2-(3,5-di-t-butyl-2-hydroxyphenyl)-5-chlorobenzotriazole,
2-(3,5-di-t-amyl-2-hydroxyphenyl)benzotriazole,
2-(2'-hydroxy-5'-t-octylphenyl)benzotriazole,
2,2'-methylenebis[4-(1,1,3,3-tetramethylbutyl)-6-[(2H-benzotri azole-2-yl)phenol)],
2-(4,6-diphenyl-1,3,5-triazine-2-yl)-5-[(hexyl)oxy]-phenol,
2,4-dihydroxobenzophenone, 2-hydroxy-4-n-octyloxybenzophenone,
2-hydroxy-4-methoxy-2'-carboxybenzophenone, polycondensates of dimethyl-1-(2-hydroxyethyl)-4-hydroxy-2,2,6,6-tetramethylpiper idinesuccinate,
bis(1-octyloxy-2,2,6,6-tetramethyl-4-piperidyl)sebacate, and
bis(2,2,6,6-tetramethyl-4-piperidyl)sebacate.

Of these, 2,2'-methylenebis[4-(1,1,3,3-tetramethylbutyl)-6-[(2H-benzotri azole-2-yl)phenol]] is particularly preferred. These ultraviolet light absorbers may be used alone or in combination.

Also it is preferable to use highly pure ultraviolet light absorbers containing almost no impurities such as organic impurities, metal impurities and chlorine.

The amount of the ultraviolet light absorber to be added is 0.005 to 1 part, preferably 0.01 to 0.5 part, more preferably 0.01 to 0.3 part by weight relative 100 parts byweight of the polycarbonate resin. When the amount of the ultraviolet light absorber is below 0.005 part by weight, the desired effects are not obtained, whereas an amount above 1 part by weight causes the hue of the composition to deteriorate.

As for the release agents, conventional materials, for example fatty acid esters such as natural and synthetic paraffin, silicone oil, polyethylene wax, beeswax, stearic acid monoglyceride, palmitic acid monoglyceride and pentaerythritol tetrastearate may be used. Of these, stearic acid monoglyceride, palmitic acid monoglyceride and pentaerythritol tetrastearate are particularly preferable. These release agents may be used alone or in combination.

Also it ispreferable to use highlypure release agents containing almost no impurities such as organic impurities, metal impurities and chlorine.

Although the amount of the release agent to be added is generally 0.005 to 2 parts by weight relative to 100 parts by weight of the polycarbonate resin composition, it is preferable to use only the minimum amount of the release agent required to satisfy the desired release effect so as to retain good hue and reduce mold deposits.

Flame retardants, antistatic agents, colorants, dyes and the like may be used alone or in combination if required.

Additives such as the above antioxidants, ultraviolet light absorbers and release agents are preferably added after addition of the aromatic polycarbonate resin (B) to prevent thermal deterioration of the additive itself. However, in this case, the extrusion process becomes complicated and the L/D ratio of the extruder must be increased, thus increasing the thermal history of the aromatic-aliphatic copolymerized polycarbonate resin composition, and bringing about coloring and molecular weight reduction as well as increasing production costs in the form of a machine for supplying the additives and extruder. Therefore, the appropriate point where the additives are added should be determined by taking into consideration a balance of the aforementioned factors.

### (Resin composition)

In the polycarbonate resin composition of the present invention, it is preferable to set a blending ratio (A/B) of aromatic-aliphatic copolymerized polycarbonate resin (A) to the aromatic polycarbonate resin (B) of 5:95 to 95:5 by weight. When the blending ratio of the aromatic polycarbonate resin (B) in the polycarbonate resin composition is below 5% byweight, the characteristics of the aromatic polycarbonate resin such as oil resistance and heat resistance are not sufficiently incorporated in the composition, thus diminishing the significance of the additives. On the other hand, when the blending ratio of the aromatic polycarbonate resin (B) is above 95% by weight, the essential effects such as improvement of photoelasticity coefficient and Abbe number can not be sufficiently attained. Within the above range, the polycarbonate resin composition with the desired properties can be obtained by determining the appropriate amount of addition of the aromatic polycarbonate resin (B) in view of the physical properties of aromatic-aliphatic copolymerized polycarbonate resin (A).

Further the mole ratio of the structural units derived from an aromatic compound and an aliphatic compound in the present polycarbonate resin (aromatic structural unit / aliphatic structural unit) is preferably between 10/90 to 90/10, and more preferably between 20/80 to 80/20. When the mole ratio of the structural unit derived from an aromatic compound and an aliphatic compound in the present polycarbonate resin (an aromatic structural unit / an aliphatic structural unit) is below 10/90, heat resistance is decreased. In a mole ratio above 90/10, not only is photoelasticity coefficient and water absorption raised, but the balance between the refractive index and degree of dispersion deteriorates.

As a blending method of an aromatic-aliphatic copolymerized polycarbonate resin (A) and an aromatic polycarbonate resin (B), known production methods of a polymer alloy or a polymer blend such as mechanical blending, freeze drying or spray drying after being dissolved in a common solvent or fine particle blending can be used. From an economical point of view, the mechanical blending method is best. Examples of typical mechanical blending methods include a melt blending method using a twin-screw extruder, a single-screw extruder, a roll kneader, an internal mixer, and the like.

The oil resistance of the polycarbonate resin composition of the present invention means the property which can withstand the effects of oils such as lubricant, light oil, kerosene, gasoline, heavy oil, machine oil, engine oil, gear oil, motor oil, tempura oil, salad oil, sesame oil and the like without a reduction in its physical properties and without deformation. It is preferable that the temperature indicating the oil resistance be from -30°C to 70°C.

### EXAMPLES

The present invention will be described below in more detail referring to examples, which are not intended to limit the scope of the present invention.

Each of the properties in examples 1 to 3 and comparative example 1 were measured according to the following methods.
(1) MI: measured at 230°C under 5.00kg load
(2) Tg: measured by a differential scanning calorimeter
(3) Refractive index: measuredbyAbbe refractometer in accordance with JIS K7105
(4) Abbe number: measured by Abbe refractometer and calculation
(5) Oil resistance: A test piece according to ASTM-D 790 was formed by injection molding. The test piece was given the fixed deflection according to the flexural strain test method and the generation of a crack was observed after salad oil was applied.

### EXAMPLE 1

### (Preparation of aromatic-aliphatic copolymerized polycarbonate resin (A))

Diphenyl carbonate liquid kept at 130°C was supplied into a mixing tank also kept at 130°C in a substantially oxygen free nitrogen gas atmosphere. After initiating stirring, 1,1-bis(4-hydroxyphenyl)cyclohexane (hereinafter BPZ) (powder) was supplied into the mixing tank so as to make the mole ratio of diphenyl carbonate to BPZ constant (=2.525). When supplying the BPZ, sodium hydrogen carbonate (0.000054 part by weight of the catalyst to 100 parts by weight of BPZ) was added while being mixed with said BPZ. Then, heating of the mixing tank was initiated to keep an internal temperature of the mixing tank at 155°C. After 1 hour from attainment of an internal temperature of 155°C, the temperature was lowered to 130°C over 15 minutes, and the mixture was transferred into a buffer tank kept at 130°C.

The meltedmixture of diphenyl carbonate and BPZ was continuously supplied into the first vertical stirring polymerization tank (reaction condition: 13.3kPa, 205°C, stirring speed 160rpm) at a flow rate of 45.1 kg/hr so that the mole ratio of the raw materials (diphenyl carbonate / BPZ + TCDDM) could be adjusted to 1.01, and simultaneously TCDDM was also continuously supplied into the first polymerization tank at a flow rate of 16.4 kg/hr. These two liquids were supplied into the first polymerization tank after each passing through 0.6 micrometer metal filters. The liquid level was kept constant while the opening of the valve installed at the polymer outlet line of the tank bottom was controlled so as to adjust mean residence time to 60 minutes. Subsequently, the polymerized liquid (prepolymer) discharged from the bottom of the tank was transferred consecutively into the second, third and fourth vertical polymerization tanks and the fifth horizontal polymerization tank (manufactured by Hitachi Ltd., Meganeyoku-jyugoki(trade name)). The liquid level was controlled so as to adjust the mean residence time in the second to fourth vertical polymerization tanks to 60 minutes respectively, and to 90 minutes in the fifth horizontal polymerization tank. Simultaneously, by-produced phenol was removed by distillation.

The polymerization conditions of each tank were as follows; in the second polymerization tank (220°C, 2000Pa, stirring speed 160rpm), in the third polymerization tank (230°C, 40Pa, stirring speed 60rpm) , in the fourth polymerization tank (240°C, 40Pa, stirring speed 20rpm) , in the fifth horizontal polymerization tank (245°C, 40Pa, stirring speed 5rpm).

The polymer discharged from the fifth horizontal type polymerization tank was continuously introduced into the 3-vent type twin-screw extruder (46mm φ twin-screw extruder, manufactured by Kobe Steel, Ltd.) while still in the melted state. At the rear side of the vent-port nearest the resin supply port, hereinafter-described additives were supplied to the resin by a side-feed compactor in the form of a masterbatch at a supply rate of 0.7kg/hr. Thereafter, the mixture was kneaded and deaerated in the vent to obtain aromatic-aliphatic copolymerized polycarbonate resin (A) (the weight ratio of the structural unit derived from TCDDM to the structural unit derived from BPZ was 60:40).

The composition of the above masterbatch was prepared based on the powdery aromatic polycarbonate resin (bisphenol A type; viscosity average molecular weight Mv = 22,000 ) [IUPILON S-3000 available from Mitsubishi Gas Chemical Co., Inc.] so as to adjust the amounts of the phosphorous acid (available from Tokyo Kasei Kogyo Co., Ltd) to 5 times (15µmole/mole (relative to total mole of BPZ and TCDDM) of the neutralization equivalent of sodium hydrogencarbonate, and to adjust the amount of 5,7-di-t-butyl-3-(3,4-dimethylphenyl)-3H-benzofuran-2-one (HP-136, available from Chiba Specialty Chemicals Co., Ltd.) to 100ppm and the amount of 2,2-methylenebis(4,6-di-t-buthylphenyl)octylphosphite (HP-10, available from Asahi Denka Co., Ltd.) to 300ppm relative to 100 parts by weight of the total resin.

### (Mixing with aromatic polycarbonate resin (B).)

Following the preparation of said aromatic-aliphatic copolymerized polycarbonate resin (A), melted aromatic polycarbonate resin (B) (bisphenol A type polycarbonate; viscosity average molecular weight Mv = 30,000 ) [IUPILON E-2000 available from Mitsubishi Gas Chemical Co., Inc.] heated in a 40mm φ single-screw extruder (L/D=28) was supplied into a twin-screw extruder at a flow rate of 14.2kg/hr so as to adjust the mixing ratio of aromatic-aliphatic copolymerized polycarbonate resin (A) to aromatic polycarbonate resin (B) to 70: 30 by weight. The mixture was kneaded and deaerated, and then screened through a 10µm resin filter and pelletized while being cooled by water. The pellets thus obtained were evaluated by the above-mentioned methods. The evaluation results are shown in table 1.

### EXAMPLE 2

The procedure was performed in the same manner as in Example 1 except that the same bisphenol A type polycarbonate resin, i.e., IUPILON S-1000 (viscosity-average-molecular-weight Mv=29,000, available from Mitsubishi Gas Chemical Co., Inc.) was used instead of IUPILON E-2000 and supplied into the twin-screw extruder at the same supply rate. The pellets obtained were evaluated by the above-mentioned methods. The evaluation results are shown in table 1.

### EXAMPLE 3

The procedure was performed in the same manner as in Example 1 except that 2,2-bis(4-hydroxyphenyl)propane was used instead of 1,1-bis(4-hydroxyphenyl)cyclohexane. The pellets obtained were evaluated by the above-mentioned methods. The evaluation results are shown in table 1.

### COMPARATIVE EXAMPLE 1

The procedure was performed in the same manner as in Example 1 except that the aromatic polycarbonate resin (IUPILON S-3000 available from Mitsubishi Gas Chemical Co., Inc.) was not added. The pellets obtained were evaluated by the above-mentioned methods. The evaluation results are shown in table 1.

**Table 1**

| | Example 1 | Example 2 | Example 3 | Comparative Example 1 |
|---|---|---|---|---|
| Tg (°C) | 122.6 | 122.1 | 120.0 | 109.0 |
| Refractive index | 1.569 | 1.565 | 1.566 | 1.552 |
| Abbe number | 36.5 | 37.5 | 33.5 | 38.9 |
| Oil resistant test by bending amount of deflection (mm) | | | | |
| 0.5 | ○ | ○ | ○ | ○ |
| 1.0 | ○ | ○ | ○ | × |
| 1.5 | ○ | ○ | ○ | × |
| 2.0 | ○ | × | × | × |
| ○: No cracks generated ×: Cracks generated | | | | |

Each of the properties in examples 1 to 3 and comparative example 1 were measured according to the following methods.
(1) MI: measured at 240°C under 5.00kg load
(2) Tg: measured by a differential scanning calorimeter
(3) Refractive index: measuredbyAbbe refractometer in accordance with JIS K7105
(4) Abbe number: measured by Abbe refractometer and calculation
(5) Falling weight impact strength: A disk of 100mmφ diameter and 3mm thickness was formed by an injection molding machine. An instrumentation falling weight having a 20R tip was impacted against the disk at 7 m/sec using the instrumentation drop impact test machine (FRACTVIS, manufactured by CHAST CO., LTD) equipped with a thermostat, and the breaking energy was measured.

### EXAMPLE 4

### (Preparation of aromatic-aliphatic copolymerized polycarbonate resin (A))

Diphenyl carbonate liquid kept at 130°C, was supplied into a mixing tank also kept at 130°C in a substantially oxygen free nitrogen gas atmosphere. After initiating stirring, 1,1-bis(4-hydroxyphenyl)cyclohexane (hereinafter BPZ) (powder) was supplied into the mixing tank so as to make the mole ratio of diphenyl carbonate to BPZ constant (=2.02). When supplying the BPZ, sodium hydrogen carbonate (0.000054 part by weight of the catalyst to 100 parts by weight of BPZ) was added while being mixed with said BPZ. Then, heating of the mixing tank was initiated to keep the internal temperature of the mixing tank at 155°C. After 1 hour from attainment of the internal temperature of 155°C, the temperature was lowered to 130°C over 15 minutes, and the mixture was transferred into a buffer tank kept at 130°C.

The melted mixture of diphenyl carbonate and BPZ was continuously supplied into the first vertical stirring polymerization tank (reaction conditions: 13.3kPa, 205°C, stirring speed 160rpm) at a flow rate of 31.2 kg/hr so that a mole ratio of the raw materials (diphenyl carbonate / BPZ + TCDDM) could be adjusted to 1.01, and simultaneously TCDDM was also continuously supplied into the first polymerization tank at a flow rate of 7.56 kg/hr. These two liquids were supplied into the first polymerization tank after each passing through 0.6 micrometer metal filters. The liquid level was kept constant while the opening of the valve installed at the polymer outlet line of the tank bottom was controlled so as to adjust mean residence time to 60 minutes. Subsequently, the polymerized liquid (prepolymer) discharged from the bottom of the tank was transferred consecutively into the second, third and fourth vertical polymerization tanks and the fifth horizontal polymerization tank (manufactured by Hitachi Ltd., Meganeyoku-jyuugoki(trade name)). The liquid level was controlled so as to adjust the mean residence time in the second to fourth vertical polymerization tanks to 60 minutes respectively, and to 90 minutes in the fifth horizontal polymerization tank. Simultaneously, by-produced phenol was removed by distillation.

The polymerization conditions of each tank were as follows; in the second polymerization tank (220°C, 2000Pa, stirring speed 160rpm), in the third polymerization tank (230°C, 40Pa, stirring speed 60rpm), in the fourthpolymerization tank (240°C, 40Pa, stirring speed 20rpm), in the fifth horizontal polymerization tank (245°C, 40Pa, stirring speed 5rpm).

The polymer discharged from the fifth horizontal type polymerization tank was continuously introduced into the 3 vent type twin-screw extruder (46mm φ twin-screw extruder, manufactured by Kobe Steel, Ltd. ) while still in the melted state. At the rear side of the vent-port nearest the resin supply port, hereinafter-described additives were supplied to the resin by a side-feed compactor in the form of a masterbatch at a supply rate of 0.5kg/hr. Thereafter, the mixture was kneaded and deaerated in the vent to obtain aromatic-aliphatic copolymerized polycarbonate resin (A) (the weight ratio of the structural unit derived from TCDDM to the structural unit derived from BPZ was 50:50).

The composition of the above masterbatch was prepared based on the powdery aromatic polycarbonate resin (bisphenol A type; viscosity average molecular weight Mv = 22,000 ) [IUPILON S-3000 available from Mitsubishi Gas Chemical Co., Inc.] so as to adjust the amounts of the p- toluene sulfonic acid butyl (available from Tokyo Kasei Kogyo Co., Ltd, hereinafter pTSB) to 9 times (27 µ mole/mole (relative to total mole of BPZ and TCDDM) of the neutralization equivalent of sodium hydrogencarbonate, and to adjust the amount of 5,7-di-t-butyl-3-(3,4-dimethylphenyl)-3H-benzofuran-2-one (HP-136, available from Chiba Specialty Chemicals Co., Ltd.) to 300ppm and the amount of 2,2-methylenebis(4,6-di-t-buthylphenyl)octylphosphite (HP-10, available from Asahi Denka Co., Ltd.) to 500ppm against 100 parts by weight of the total resin.

### (Mixing with aromatic polycarbonate resin (B).)

Following the preparation of said aromatic-aliphatic copolymerized polycarbonate resin (A), melted aromatic polycarbonate resin (B) (bisphenol A type polycarbonate; viscosity average molecular weight Mv = 25,000 ) [IUPILON S-2000 available from Mitsubishi Gas Chemical Co., Inc.] heated in a 40mm φ single-screw extruder (L/D=28) was supplied into a twin-screw extruder at a flow rate of 4.5 kg/hr. The mixture was kneaded and deaerated, and then, screened through a 10µm resin filter and pelletized while being cooled by water. The pellets thus obtained were evaluated by the above-mentioned methods. The evaluation results are shown in table 2.

### EXAMPLE 5

The preparation of the aromatic-aliphatic copolymerized polycarbonate resin (A) was performed in the same manner as in Example 4 except that the amount of the catalyst was 0. 000074 part by weight per 100 parts by weight of BPZ, and the melted mixture of diphenyl carbonate and BPZ (mole ratio of diphenyl carbonate / BPZ =2.19 ) was continuously supplied into the first vertical polymerization tank at a flowrate of 31.2 kg/hr, and simultaneously TCDDM was continuously supplied into the first polymerization tank at a flow rate of 8.36 kg/hr. Also, the procedure was performed in the same manner as in Example 4 except that bisphenol A type polycarbonate resin, IUPILON E-2000 (viscosity-average-molecular-weight Mv = 30,000, available fromMitsubishi Gas Chemical Co., Inc.) was used instead of IUPILON S-2000 and supplied into the twin-screw extruder at the supply rate of 1.75 kg/hr. The pellets obtained were evaluated by the above-mentioned methods. The evaluation results are shown in table 2.

### EXAMPLE 6

The procedure was performed in the same manner as in Example 4 except that the masterbatch was added after the aromatic poly carbonate resin when the masterbatch of the additives and the melted aromatic poly carbonate resin heated in the single-screw extruder (L/D=28) were supplied into the twin-screw extruder (46mm φ twin screw extruder, manufactured by Kobe Steel). The pellets obtained were evaluated by the above-mentioned methods. The evaluation results are shown in table 2.

### EXAMPLE 7

A 50 liter reaction vessel equipped with a stirrer and a distillator were charged with 6030 g (22.5 mol) of BPZ, 4410 g (22.5 mol) of TCDDM, 10110 g (47.25 mol) of diphenyl carbonate, 0.0113 g (1.35 x 10⁻⁴ mol) of sodium hydrogen carbonate, and the mixture was heated to 200°C in a nitrogen atmosphere and stirred for 30 minutes. Thereafter, the degree of vacuum was adjusted to 13.3kPa and the temperature was raised to 240°C to conduct an ester interchange reaction while removing by-produced phenol by distillation. At a point prior to completion of the distilling out of phenol, the degree of vacuum was further increased and stirring was carried out for an additional two hours under conditions of 133Pa or less. After completion of the reaction, nitrogen was blown into the reactor until atmospheric pressure was reached, and the aromatic-aliphatic copolymerized polycarbonate resin (A) was removed. Relative to 100 parts by weight of the aromatic-aliphatic polycarbonate resin thus obtained, 25 parts by weight of the aromatic polycarbonate resin (B) (bisphenolAtype; viscosity average molecular weight Mv=25,000) [IUPILON S-2000 available from Mitsubishi Gas Chemical Co., Inc.], 0.0025g of diphenyl phosphate as a catalyst deactivator, 0.66g of n-octadecyl-3-(3,5-di-t-butyl-4-hydrxyphenyl)propionate as an antioxidant, and 0.66g of tris(2,4-di-t-butylphenyl)phosphate were formulated and melt-kneadedin atwin-screw extruder to obtain resin pellets. The pellets obtained were evaluated bythe above-mentioned method. The evaluation results are shown in table 2.

### COMPARATIVE EXAMPLE 2

The procedure was performed in the same manner as in Example 4 except that the aromatic polycarbonate resin (bisphenol A type; viscosity average molecular weight Mv = 22,000) [IUPILON S-3000 available from Mitsubishi Gas Chemical Co., Inc.] was not added to the twin-screw extruder. The pellets obtained were evaluated by the above-mentioned method. The evaluation results are shown in table 2.

**Table 2**

| | Example 4 | Example 5 | Example 6 | Example 7 | Comparative Example 2 |
|---|---|---|---|---|---|
| MI | 5.2 | 5.7 | 6.1 | 5.5 | 5.8 |
| Tg (°C) | 129 | 123 | 128 | 129 | 124 |
| Refractive index | 1.569 | 1.565 | 1.569 | 1.568 | 1.563 |
| Abbe number | 36.3 | 38.1 | 36.2 | 36.4 | 39.3 |
| Falling weight impact strength (J) | | | | | |
| 23°C | 125 | 118 | 115 | 122 | 124 |
| 0°C | 122 | 121 | 111 | 115 | 31 |
| -10°C | 120 | 115 | 102 | 110 | 15 |

### Industrial Applicability

The polycarbonate resin of the present invention has an improved refractive index, balance of dispersion, photoelastic constant, and so on while still maintaining the characteristics of polycarbonate, such as excellent impact resistance and heat resistance, and hence it can be suitably used as a plastic optical material for various lenses, prisms, optical disk substrates, and the like.

## Claims

1. A polycarbonate resin composition comprising an aromatic-aliphatic copolymerized polycarbonate resin (A) and an aromatic polycarbonate resin (B) having a structural unit represented by the following formula (1): 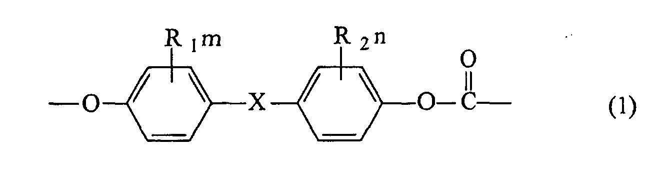 (Where X in the above formula (1) is: 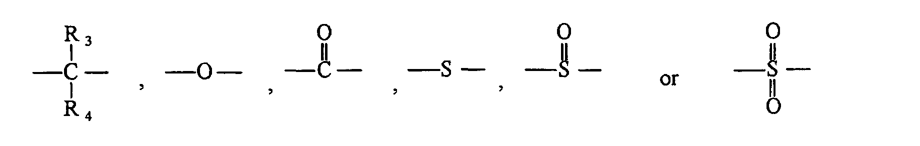 and wherein R₃ and R₄ are a hydrogen atom, an alkyl group having 1 to 10 carbon atoms or a phenyl group, and R₃ and R₄ may combine to form a ring, R₁ and R₂ are a hydrogen atom, an alkyl group having 1 to 10 carbon atoms or a halogen atom, R₁, R₂, R₃ and R₄ may be same or different, and m and n are a number of the substituent being an integer from 0 to 4).

2. The polycarbonate resin composition according to claim 1, **characterized in that** the aromatic-aliphatic copolymerized polycarbonate resin (A) is a copolymer derived from an aromatic dihydroxy compound and an aliphatic dihydroxy compound produced by an ester interchange method.

3. The polycarbonate resin composition according to claim 1, wherein the aromatic polycarbonate resin (B) has a viscosity average molecular weight of 18,000 to 50,000.

4. The polycarbonate resin composition according to claim 1, wherein the ratio of the aromaticpolycarbonate resin (B) in the polycarbonate resin composition is from 5 to 95% by weight and the ratio of a structural unit derived from the aromatic dihydroxy compound in the polycarbonate resin composition is from 10 to 90% by mole.

5. The polycarbonate resin composition according to claim 2, **characterized in that** the aliphatic dihydroxy compound has an alicyclic structure.

6. The polycarbonate resin composition according to claim 2, **characterized in that** the aliphatic dihydroxy compound is tricyclo (5.2.1.0^{2.6}) decane dimethanol represented by the following formula (3):

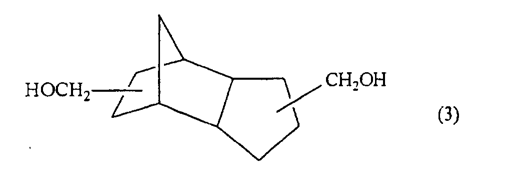

7. The polycarbonate resin composition according to claim 2, **characterized in that** the aromatic dihydroxy compound is
2,2-bis(4-hydroxyphenyl)propane or
1,1-bis(4-hydroxyphenyl)cyclohexane.

8. The polycarbonate resin composition according to anyone of claims 1 to 7, wherein the composition is used for optical materials.

9. The polycarbonate resin composition according to anyone of claims 1 to 7, wherein the composition is used for plastic lenses.

10. An optical material comprising the polycarbonate resin composition according to any one of claims 1 to 7 having (1) a refractive index from 1.54 to 1.60 and (2) an Abbe number from 35 to 50.
